# EUROPEAN PATENT APPLICATION

(11) **EP 2 612 705 A2**
(43) Date of publication of application: **10.07.2013**
(21) Application number: 11822102.7
(22) Date of filing: 30.08.2011
(51) Int. Cl.: B01J 23/10, B01J 29/06, B01J 23/22, B01J 35/04

(54) **CATALYST FOR SELECTIVE CATALYTIC REDUCTION, WITH IMPROVED DURABILITY**

(30) Priority: 31.08.2010 KR 20100084463
(71) Applicant: Heesung Catalysts Corporation, Kyeonggi-do 429-450 (KR)
(72) Inventor: HAN, Hyun Sik, Ansan-si Kyeonggi-do 425-870 (KR); KIM, Jin Won, Shiheung-si Kyeonggi-do 429-450 (KR); KIM, Eun Seok, Ansan-Si Kyeonggi-do 426-743 (KR); HAN, Jae Uk, Ansan-si Kyeonggi-do 425-832 (KR)
(74) Representative: Regimbeau
(86) International application number: PCT/KR2011/006375
(87) International publication number: WO 2012/030127

(57) **Abstract**

The present invention relates to a catalyst for selective catalytic reduction, using ammonia or urea as a reducing agent, and particularly, to a catalyst for selective catalytic reduction in which ceria or a ceria composite oxide is coated. The present invention relates to a catalyst, wherein ceria or a ceria-composite oxide is coated on the uppermost layer of a catalyst for selective catalytic reduction comprising a base metal such as vanadium and the like, which are zeolitic or non-zeolitic. Surprisingly, if ceria or a ceria-containing composite oxide is coated on the uppermost layer of a catalyst for selective catalytic reduction, it is possible to show catalytic activity at a relatively low temperature, to improve thermal durability and poison resistance against alkali metals and the like, and to accelerate the efficiency of urea hydrolysis.

## Description

### Technical Field

The present invention relates to a selective catalytic reduction catalyst using ammonia or urea as a reducing agent, which is improved in poisoning resistance and heat resistance and is enhanced in low temperature activity, and more particularly, to a selective catalytic reduction catalyst, wherein the uppermost surface of the catalyst comprising zeolite or non-zeolite as a base metal is coated with ceria or a ceria composite oxide, in which the coating of the uppermost surface of the catalyst with ceria or a ceria composite oxide enables a nitrogen oxide (NOx) reduction performance to be enhanced in the relatively low temperature range, and may improve resistance to poisoning due to alkali metal components such as phosphorus, calcium, zinc, etc., as well as unburned hydrocarbons of exhaust gas emitted from internal combustion engines, and may also improve thermal durability even upon high temperature exposure, and furthermore in which the use of urea as a reducing agent upon selective catalytic reduction may increase the efficiency of urea hydrolysis, thus increasing the ammonia yield.

### Background Art

In the case of internal combustion engines operating under conditions of using air at or over a predetermined amount necessary for stoichiometric combustion, that is, under lean conditions, it is very difficult to remove nitrogen oxide (NOx) from exhaust gas.

Among NOx reduction techniques, which are applied to stationary sources corresponding to lean conditions and whose effects have been proven, one such technique is selective catalytic reduction (SCR) using ammonia or aqueous ammonia. As such, NOx reacts with ammonia which is a reducing agent on the surface of a n SCR catalyst and is thus reduced into nitrogen (N2), whereby the amount of NOx is decreased. Typically, vanadium-titanium oxide has been utilized as an SCR catalyst in stationary sources. In this case, a NOx reduction performance of 90% or more is exhibited at 300 - 450°C. To apply the vanadium-titanium oxide catalyst to mobile sources, catalysts containing tungsten oxide (W03), etc., are developed so that deteriorated catalytic performance due to poisoning by virtue of a sulfur component of fuel and high temperature exposure is improved, and are being applied to large diesel vehicles. In order to cope with reinforced exhaust gas regulations in the shipping industry in future, a vanadium-titanium oxide catalyst is expected to be generally used. However, the performance of the catalyst may drastically deteriorate due to high temperature exposure or because of the adsorption of unburned hydrocarbons of exhaust gas and the other alkali metal components such as sulfur, phosphorus, calcium, zinc, etc., of fuel (engine oil) on the catalyst, which has to be urgently solved.

On the other hand, with the goal of ensuring end uses requiring higher temperature durability (600°C or more) and higher active temperature (350 - 550°C) compared to the vanadium-titanium oxide catalyst, zeolite catalysts such as Fe-beta, Cu-beta, Fe-ZSM5, and Cu-ZSM5 catalysts were developed and have been used, in which ZSM5 and beta-zeolite are ion exchanged with transition metal ions such as iron (Fe) or copper (Cu). However, these catalysts are problematic because low temperature activity is inferior to the vanadium-titanium oxide catalyst and the catalytic performance may remarkably deteriorate upon poisoning due to hydrocarbons and alkali metal components such as sulfur, phosphorus, calcium, zinc, etc.

In accordance with the demand for greenhouse gas reduction and the regulation of exhaust gas emission all over the world, engines which are being newly developed are widely subjected to low temperature combustion techniques to achieve high fuel efficiency and exhaust gas reduction. Hence, the exhaust gas temperature is expected to be even lower in future, and thus low temperature performance is a characteristic that is receiving great attention.

### Disclosure

### Technical Problem

Accordingly, there are needs for a novel catalyst having superior low temperature activity, thermal durability against high temperature exposure in internal combustion engines, and resistance to poisoning due to alkali metal components such as sulfur, phosphorus, calcium, zinc, etc.

The present inventors performed SCR reactions using ceria or a ceria composite oxide as the uppermost layer of a conventional SCR catalyst, and thus discovered that the resulting catalyst is capable of solving the above problems, and also, that the presence of the uppermost coating layer may increase the conversion of urea into ammonia, with these findings culminating in the present invention.

### Technical Solution

The present invention provides an SCR catalyst comprising (a) zeolite or non-zeolite as a base metal (vanadium-titanium oxide and zirconia), wherein the uppermost layer thereof comprises ceria alone or composite oxide.

In the present invention, the composite oxide is a mixed oxide comprising two or more elements containing cerium, in particular, an amorphous oxide comprising oxides of two or more elements containing cerium, which are not physically mixed. For example, the composite oxide may be Ce-LMNOx (L, M, N = Zr, Y, Pr, Nd, La or Mn).

The ceria alone or the composite oxide may be applied onto a conventional SCR catalyst comprising zeolite or non-zeolite as a base metal (vanadium-titanium oxide and zirconia).

The SCR catalyst according to the present invention may be applied onto a ceramic honeycomb, or may be extruded in the form of a honeycomb. Thus, the oxide coating according to the present invention may be accomplished via a typical wash-coating process by virtue of a ceria-based wash-coating solution able to commercially use the honeycomb. To attain a flat SCR catalyst layer, the wash-coating process may be performed by dip-coating an SCR catalyst comprising zeolite or non-zeolite with a wash-coating solution, and removing an excess of the oxide coating using compressed air. The wash-coated catalyst may be dried at about 100°C and then fired at 450 - 550°C.

### Advantageous Effects

According to the present invention, when an SCR catalyst having a ceria coating is applied to an ammonia/urea-SCR system, superior activity at low temperature can be obtained and urea hydrolysis can be accelerated, thus improving the NOx conversion of exhaust gas. Furthermore, this catalyst can exhibit thermal durability upon high temperature exposure, and is increased in poisoning resistance, which enables it to maintain catalytic activity even when exposed to high-concentration sulfur or alkali metal.

### Description of Drawings

FIG. 1 illustrates the NOx conversion of catalysts (a standard catalyst, a developed catalyst) after exposure of the standard catalyst (without a ceria coating) and the developed catalyst (with a ceria coating) to poisoning components for a long period of time using ship fuel (MF30);
FIG. 2 illustrates the NOx conversion of the standard or developed SCR catalyst (vanadium-titanium oxide catalyst) after hydrothermal treatment at 625°C for 24 hr;
FIG. 3 illustrates the NOx conversion of the standard or developed SCR catalyst (iron-zeolite catalyst) after hydrothermal treatment at 700°C for 24 hr; and
FIG. 4 illustrates the efficiency of urea hydrolysis of the standard or developed SCR catalyst (vanadium-titanium oxide catalyst).

### Mode for Invention

### Example 1

A developed catalyst A was prepared in such a manner that a cylindrical honeycomb support (110Φ*78.9, 400 cpsi, 0.75 L) was coated with vanadium-titanium oxide, and then dipped into a wash-coating solution including ceria alone, so that the uppermost layer of the SCR catalyst was formed with a ceria coating. The prepared catalyst was subjected to hydrothermal treatment at 625°C for 24 hr under 10% humidity conditions.

### Example 2

A developed catalyst B was prepared in such a manner that a hexahedral honeycomb support (150*150*100, 36 cpsi, 2.25 L) was coated with vanadium-titanium oxide and then dipped into a wash-coating solution including a composite oxide composed mainly of ceria, so that the uppermost layer of the SCR catalyst was formed with a ceria coating. The prepared (fresh) catalyst was aged at 250°C for 8 hr using ship fuel MF30 (35% diesel + 65% bunker C oil).

### Example 3

A developed catalyst C was prepared in such a manner that a cylindrical honeycomb support (110Φ*78.9, 400 cpsi, 0.75 L) was coated with iron-zeolite, and then dipped into a wash-coating solution including ceria alone, so that the uppermost layer of the SCR catalyst was formed with a ceria coating. The prepared catalyst was subjected to hydrothermal treatment at 700°C for 24 hr under 10% humidity conditions.

### Test Example 1

### Low temperature activity test of SCR catalyst

In order to evaluate the activity of the SCR catalyst, each of the coated honeycombs of Examples 1, 2 and 3 was placed into a test reactor. In the case of the SCR catalyst applied onto the hexahedral support, NOx (350 - 400 ppm) was fed (via an inlet) at a space velocity of 20,000/hr, and in the case of the SCR catalyst applied onto the cylindrical support, NOx (400 - 450 ppm) was fed at a space velocity of 53,000/hr, and the NOx conversions were measured and compared.

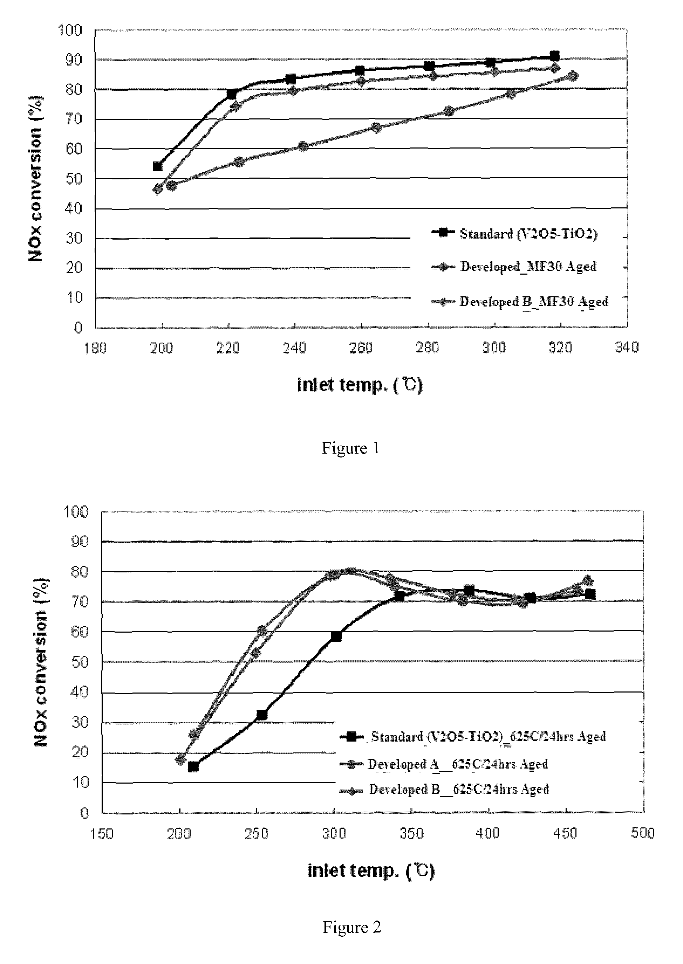

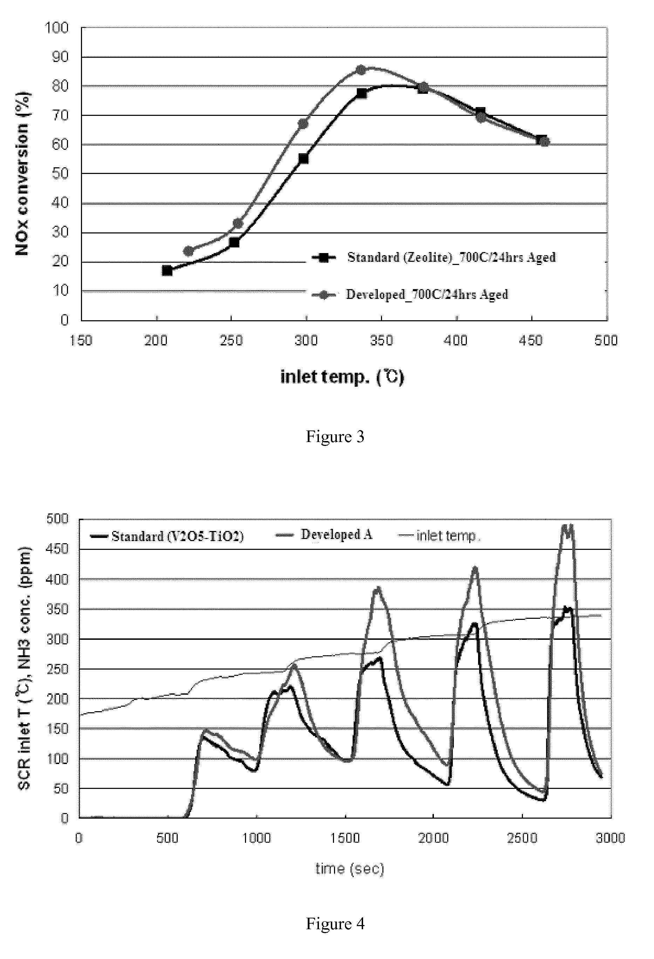

The NOx conversion results are shown in FIG. 1 (the catalysts aged using the ship fuel), FIG. 2 (the catalysts subjected to hydrothermal treatment at 625°C), and FIG. 3 (the catalysts subjected to hydrothermal treatment at 700°C). As shown in FIG. 1, the SCR catalyst (the developed catalyst) having the ceria coating as the uppermost layer exhibited much higher conversion even after aging treatment using the ship fuel at low temperature (200 - 250°C), compared to the SCR catalyst (the standard catalyst) having no oxide coating. As shown in FIGS. 2 and 3, the SCR catalyst (the developed catalyst) having the ceria coating as the uppermost layer manifested much higher NOx conversion after hydrothermal treatment, compared to the SCR catalyst (the standard catalyst) having no oxide coating.

### Test Example 2

### Urea hydrolysis performance test

In order to evaluate the activity of the SCR catalyst, each of the honeycombs coated with the SCR catalyst of Example 1 was placed into a test reactor, and urea (2 g/min) was then sprayed at a space velocity of 53,000/hr, and the hydrolysis conversions of urea into ammonia were measured and compared.

The ammonia conversion results are shown in FIG. 4. As shown in FIG. 4, the SCR catalyst having the ceria coating as the uppermost layer exhibited much higher urea hydrolysis conversion, compared to the SCR catalyst having no oxide coating.

### Industrial Applicability

Therefore, when an SCR catalyst having a ceria coating according to the present invention is applied to a urea-SCR system, superior activity at low temperature can be obtained and urea hydrolysis can be accelerated, thus improving the total NOx conversion.

## Claims

1. A selective catalytic reduction (SCR) catalyst, comprising an uppermost layer composed of ceria alone or a ceria composite oxide.

2. The selective catalytic reduction (SCR) catalyst of claim 1, wherein the SCR catalyst comprises zeolite or non-zeolite as a base metal oxide.

3. The selective catalytic reduction (SCR) catalyst of claim 2, wherein the non-zeolite as the base metal oxide is vanadium-titanium oxide or zirconia.

4. The selective catalytic reduction (SCR) catalyst of claim 1, wherein the ceria composite oxide is a mixed oxide of cerium and one or more metals selected from among rare earth metals, transition metals, alkali metals, and alkaline earth metals.

5. The selective catalytic reduction (SCR) catalyst of claim 1, wherein the SCR catalyst is applied onto a honeycomb or is extruded in a form of a honeycomb.
